# EUROPEAN PATENT SPECIFICATION

(11) **EP 2 371 488 B1**
(45) Date of publication and mention of the grant of the patent: **30.10.2013**
(21) Application number: 11158417.3
(22) Date of filing: 16.03.2011
(51) Int. Cl.: B25B 11/00, B23Q 1/03, B23Q 1/00, B23B 31/107

(54) **Device for supporting workpieces**
Werkstückhaltevorrichtung
Dispositif de support de pièce de travail

(30) Priority: 29.03.2010 IT MO20100086
(43) Date of publication of application: 05.10.2011
(73) Proprietor: SCM Group S.p.A., 47900 Rimini (IT)
(72) Inventor: Grassi, Giancarlo, 47834, Montefiore Conca (RN) (IT)
(74) Representative: Pandolfi, Paolo

(56) References cited:
- EP-A1- 0 291 482
- DE-A1- 3 512 890
- DE-A1-102004 043 697
- DE-A1-102008 016 159
- DE-U1- 8 814 459
- DE-U1- 20 100 639
- DE-U1-202008 002 364
- US-A1- 2007 001 407

## Description

The invention relates to a device for supporting workpieces, in particular panels made of wood or similar materials, and a machine tool for machining panels made of wood or similar materials including this device.

Machine tools for machining panels made of wood are known that comprise a base including a conveyor belt for removing chips and machining waste from the machine.

Such machines further comprise a pair of longitudinal guides fixed to the base and positioned on opposite sides of the conveyor belt.

The guides slidably support a plurality of crosspieces on each of which one or more supporting devices are slidably supported to support the panels to be machined.

Both the supports along the guides and the supporting devices along the crosspieces are positioned in function of the dimensions of the panels to be machined or of the machinings to be performed on the latter.

Known supporting devices comprise a slide, which is slidably supported by the crosspiece, and a supporting plate, defining, with the supporting plates of the other supporting devices, a supporting plane for the panels to be machined. The supporting plates are connected in a releasable manner to the respective slides in such a manner that, following the breakage or malfunction of the supporting plates, or a change in the size of the panels to be machined, or a change in the machinings to be performed on the panels, it is sufficient to replace only the supporting plates with other working supporting plates or with plates of a different size and not the entire device.

Connecting the supporting plate to the respective slide by a screw is known.

A drawback of this solution is that it makes operations of replacing the supporting plates particularly slow and laborious, which noticeably reduces the productivity of the machine tool.

Connecting the supporting plate to the respective slide via a vacuum is also known.

This vacuum, which is sufficient for maintaining the supporting plate anchored to the slide, is achieved in a chamber obtained between the supporting plate and the slide and communicating with a source of pressurised air.

A drawback of this solution is that in the event of a fault in the pressurised air source, i.e. if there is not air, the supporting plates detach from the respective slides with a consequent grave risk of injury to the operators positioned near the machine tool.

DE 20 2008 002364 U1 discloses a device as in the preamble of claim 1. EP 0 291 482 A1 discloses hooking means comprising a plurality of anchoring flaps arranged mutually angularly spaced apart from one another along a substantially circular path.

An object of the invention is to improve the devices for supporting workpieces, in particular panels made of wood or similar materials.

A further object is to obtain devices for supporting workpieces, in particular panels made of wood or similar materials, that enable the supporting plates to be changed more quickly than is the case with known devices.

A still further object is to supply devices for supporting workpieces, in particular panels made of wood or similar materials, that are safer than the known devices.

Another object is to improve machine tools for machining panels made of wood or similar materials.

The invention provides a device as defined in independent claim 1.

Owing to the invention it is possible to make a safer device than known devices and which enables the respective supporting plate to be replaced quickly.

In fact, in order to replace said supporting element, it is sufficient to drive said hooking means between said hooking position and said release position, which makes replacing said supporting element particularly fast.

Still, said hooking means is configured in such a manner as to remain hooked to said further hooking means also in the absence of an air supply or current to the device, which makes the latter particularly safe.

The invention can be better understood and implemented with reference to the attached drawings that show an embodiment thereof by way of non-limiting example, in which:
Figure 1 is a perspective view of a device for supporting workpieces according to the invention;
Figure 2 is a perspective view of the device in Figure 1 mounted on a crosspiece of a machine for machining panels made of wood or similar materials;
Figure 3 is an enlarged detail of Figure 2 with some elements removed from the device to show others better;
Figures 4 and 5 are enlarged details of Figure 3;
Figure 6 is a fragmentary cross section of the device in Figure 1 in a first configuration;
Figure 7 is an exploded view of Figure 6;
Figure 8 is a view like the one in Figure 6 of the device in Figure 1 in a second configuration.

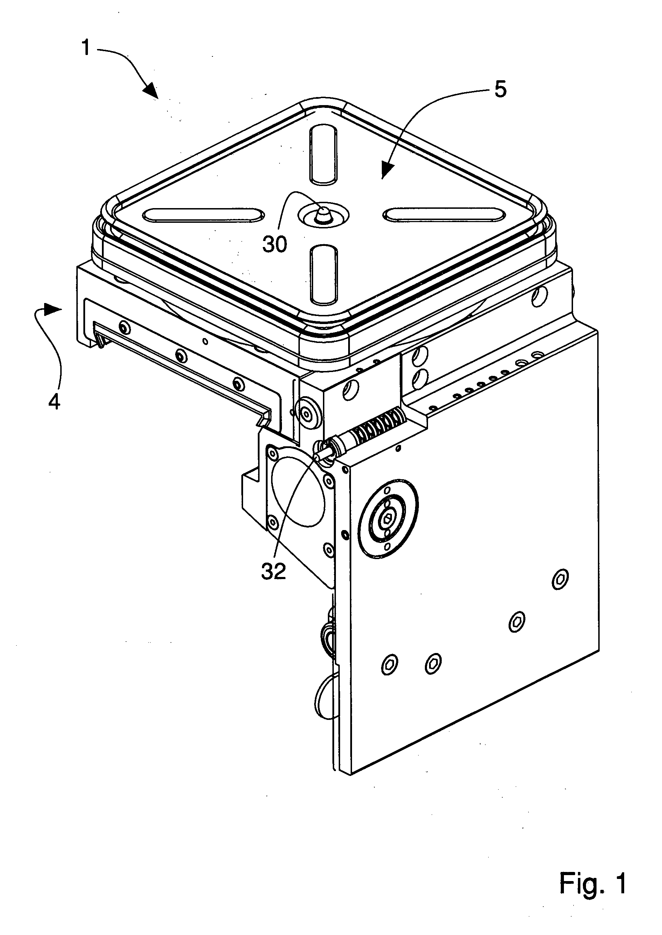

With reference to Figure 1 there is shown a device 1 for supporting workpieces, in particular panels made of wood or similar materials, which are not shown.

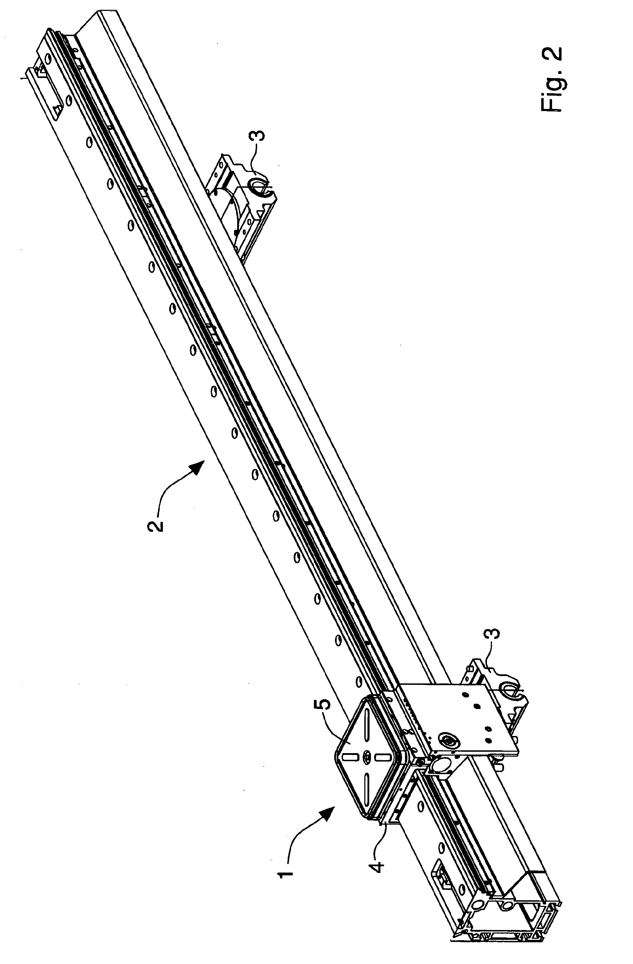

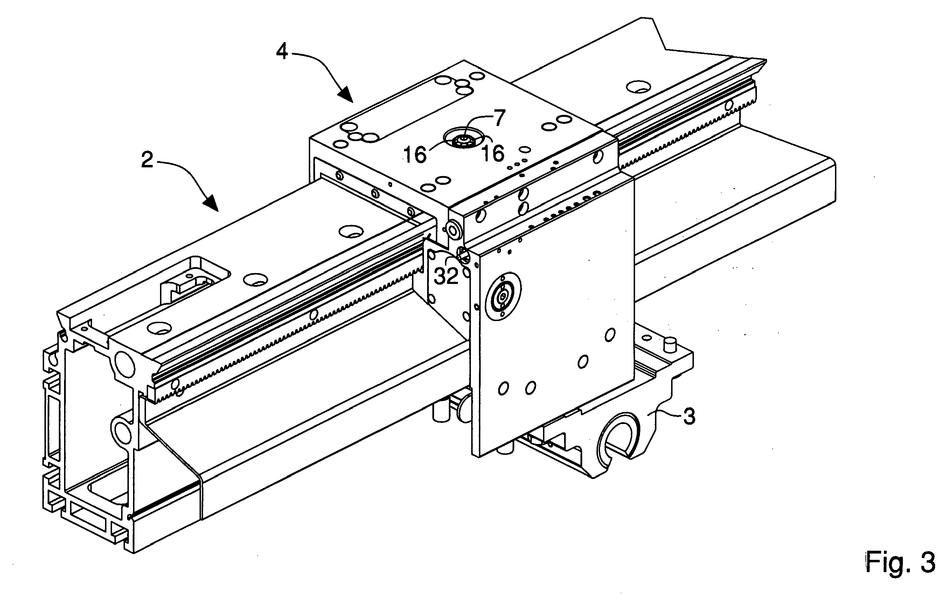

The device 1 is arranged for sliding along a crosspiece element 2 (Figures 2 and 3) of a machine tool, which is not shown, arranged for machining the aforesaid panels.

In particular, this machine tool comprises an elongated base extending along a longitudinal direction.

The base is "U"-shaped and comprises a pair of lateral longitudinal members each extending substantially parallel to the longitudinal direction.

Each longitudinal member supports a guide, which also extends substantially parallel to the longitudinal direction.

This machine further includes a conveyor belt, for removing chips and machining waste from the machine, interposed between the longitudinal members.

Also, the machine tool comprises an open or closed portal element, mounted slidably on the base.

The portal element in turn slidably supports at least one operating head arranged for performing the machinings on the panels.

The operating head is movable along the longitudinal direction, along a direction that is transverse to the longitudinal direction and along a vertical direction, and is rotatable around one or more rotation axes.

The machine tool is further provided with a plurality of crosspieces 2, each of which is defined by a hollow tubular profiled section with a substantially rectangular section. Each crosspiece 2 extends transversely, in particular perpendicularly, with respect to the longitudinal direction and is supported slidably by the guides along the longitudinal direction by carriage elements 3 (Figure 2 e 3).

In this manner, the crosspieces 2 can be moved, manually or by movement devices, along the guides.

As mentioned above, the crosspieces 2 slidably support one or more devices 1, the arrangement of which on the respective crosspieces 2 depends substantially on the dimension of the panel to be machined and on the machinings to be performed on the panel.

Each device 1 comprises a slide 4 slidably mounted in a known manner to the corresponding crosspiece 2, to be moved, manually or by a respective driving device that is known and not illustrated, along the crosspiece 2, and a supporting plate 5 defining, with the other supporting plates 5 of the other devices 1, a supporting plane for supporting the panel to be machined.

The supporting plates 5 can comprise suction cup elements 30 for retaining the panel anchored to the supporting plane during machining.

The supporting plates 5 are releasably connected, as will be disclosed better below, to the respective slides 4 to enable the supporting plates 5 to be replaced rapidly in the event of breakage or malfunction thereof, or the size of the panels to be machined to be changed, or the machinings to be performed on the panels to be changed.

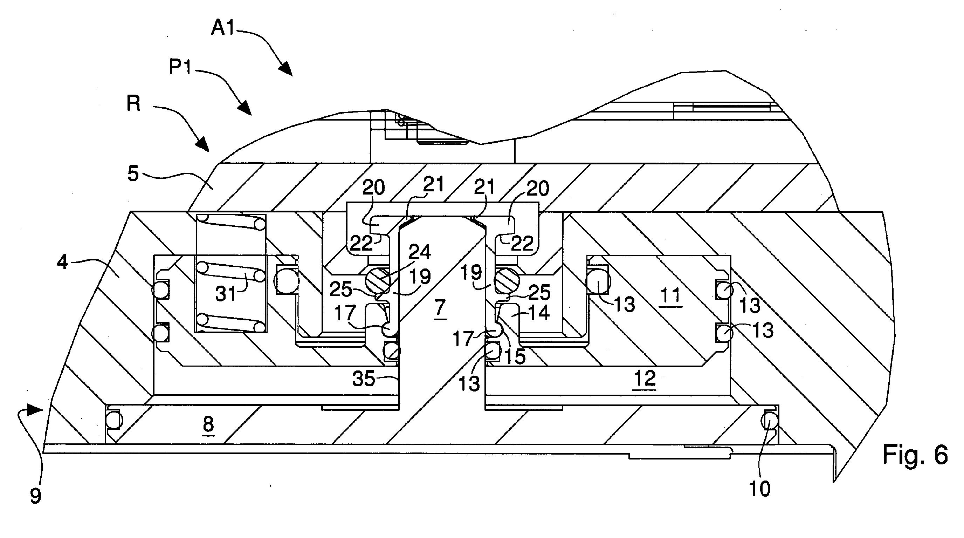

As shown in Figures 6 to 8, each device 1 comprises a pin 7. The pin 7 extends from a central zone of a plate 8 fixed to a lower portion 9 of the respective slide 4, the lower portion 9 facing the respective crosspiece 2.

In particular, between the plate 8 and the lower portion 9, there is a seal 10 to ensure the seal between the plate 8 and the lower portion 9.

On the pin 7 there is slidably mounted a piston 11, for example of the double-acting type.

The piston 11, driven by a pneumatic driving system that is known and not shown, is movable in a chamber 12 obtained in the slide 4 and bounded by the latter, by the plate 8 and by the pin 7.

Between the piston 11 and the pin 7, and between the piston 11 and the slide 4, further seals 13 are provided to ensure the seal between the piston 11 and the chamber 12.

The piston 11 further comprises a central projection 14 nearer the pin 7.

The central projection 14 is provided with a substantially circular groove 15 facing the pin 7.

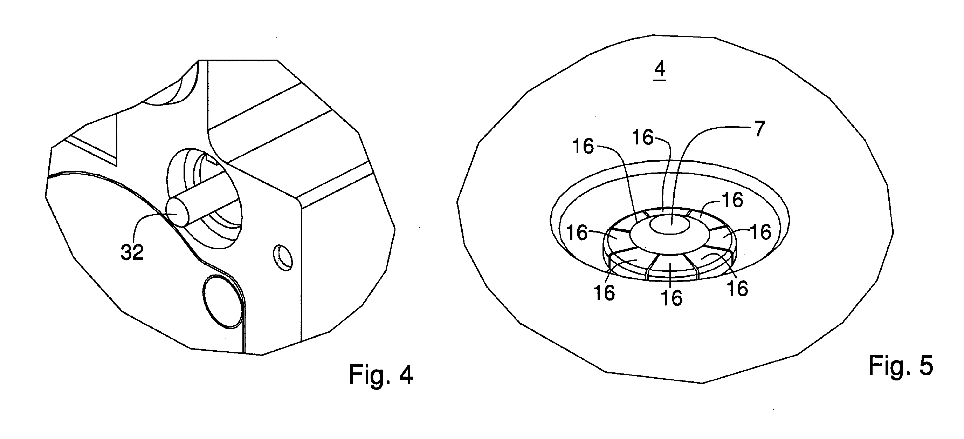

Each device 1 further comprises a plurality of anchoring flaps 16, for example eight, positioned radially with respect to and around the pin 7 (Figures 3 and 5 to 8).

More precisely, the anchoring flaps 16 are positioned, reciprocally angularly spaced apart from one another, along a substantially circular path around the pin 7.

The anchoring flaps 16 are slidably supported by the pin 7 and are interposed between the latter and the piston 11. Each anchoring flap 16 comprises a body 19, of elongated shape, provided with a rounded end 17 hinged in the groove 15.

Also, each body 19 comprises a hammer-shaped further end 18 that is opposite the respective end 17.

This further end 18 comprises an anchoring element 20 and an operating element 21 positioned and projecting from opposite sides of the body 19.

In particular, the anchoring element 20 projects towards the outside of the body 19, whilst the operating element 21 projects towards the inside of the body 1.

Also, the anchoring element 20 and the operating element 21 respectively comprise an anchoring surface 22 and an operating surface 23, the function of which will be explained below.

Each anchoring flap 16 further comprises a bead 25 projecting towards the outside of the body 19 and positioned between the end 17 and the further end 18.

Each device 1 is further provided with a spring 24 positioned around the anchoring flaps 16 and supported by the beads 25.

In use, the spring 24 acts on the anchoring flaps 16 in such a manner as to maintain the anchoring flaps 16 pressed against the pin 7.

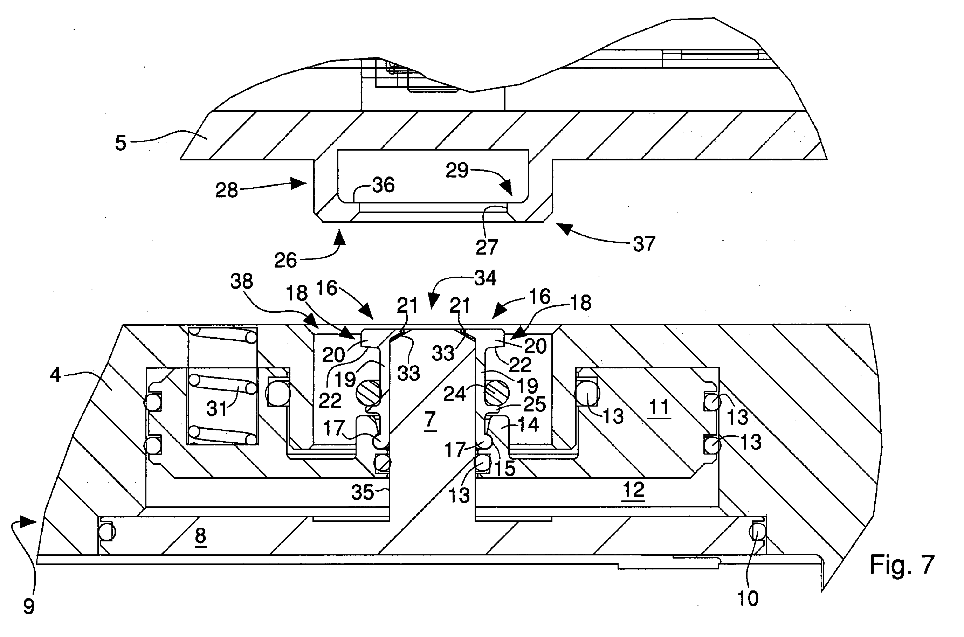

Also, each device 1 includes a ring element 26 provided with an edge 29 arranged for engaging with the anchoring elements 20, as will be disclosed better below (Figure 7).

The ring element 26 is supported by and bounds an opening 27 of a substantially cylindrical wall 28, projecting from the supporting plate 5 towards the slide 4.

The wall 28 and the ring element 26 form a substantially cylindrical shank 37 arranged for being received in a housing 38 obtained in the slide 4 (Figure 7).

Also, each device 1 comprises one or more further springs 31 housed and acting between the slide 4 and the piston 11 in such a manner as to push the piston 11 towards the plate 8. Each device 1 is further provided with a valve, which is not shown, for example of the slide-valve type, interposed between, to flowingly connect, the chamber 12 and a source of pressurised air, which is not shown.

The valve is drivable manually by an operator by means of a pushbutton 32 with which each device 1 is provided (Figures 1, 3 and 4).

Figure 6 shows a first configuration A1 of the device 1 in which the supporting plate 5 is unhooked from the slide 4. In this first configuration A1, the piston 11 is positioned in a first position P1 in which it positions the anchoring flaps 16 in a release position R in which the anchoring elements 20 are disengaged from the edge 29 and the supporting plate 5 is released from the slide 4.

More precisely, in the release position R, the anchoring elements 20 are positioned near one another such as to unhook from the edge 29.

In the release position R the body 19 of the anchoring flaps 16 is pressed by the spring 24 against a side surface 35 of the pin 7, and the operating surfaces 23 face a further operating surface 33 of an end portion 34 of the pin 7, the further operating surface 33 being a concave surface with a concavity facing downwards.

Also, in the release position R the anchoring elements 20 are received inside the cylindrical wall 28.

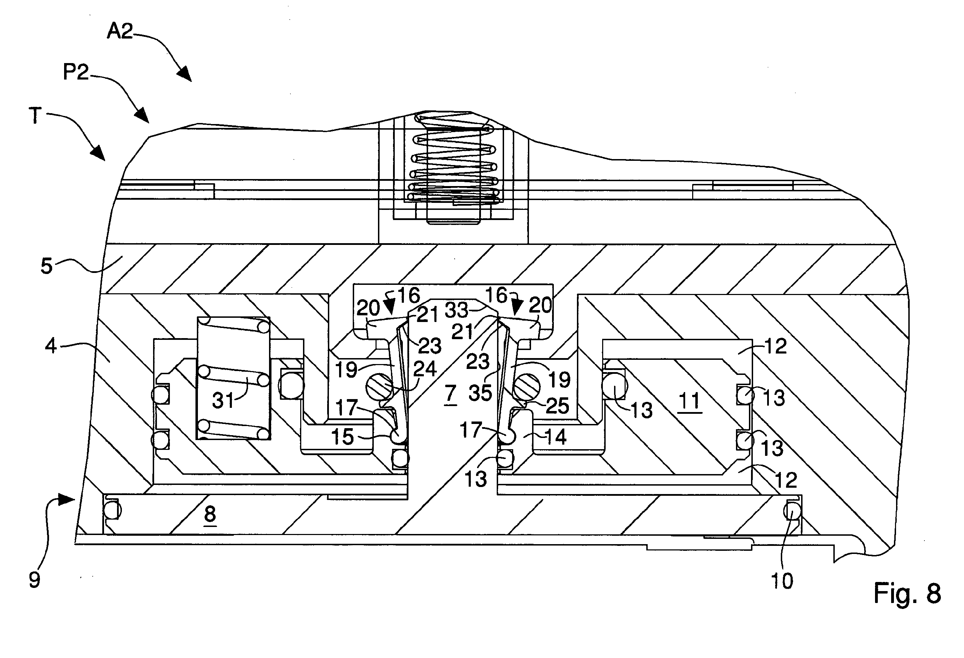

Figure 8 shows a second configuration A2 of the device 1 in which the supporting plate 5 is hooked onto the slide 4.

In this second configuration A2, the piston 11 is positioned in a second position P2 in which it positions the anchoring flaps 16 in a hooking position T in which the anchoring surfaces 22 of the anchoring elements 20 engage with a further anchoring surface 36 of the edge 29 and the supporting plate 5 is fixed to the slide 4.

More precisely, in the hooking position T, the anchoring elements 20 are positioned apart from one another such as to hook onto the edge 29.

In the hooking position T the body 19 of the anchoring flaps 16 is pressed by the spring 24 against the pin 7 but is maintained spaced away from the side surface 35 following the contact between the operating element 21 and the side surface 35 of the pin 7.

Also, even in the hooking position T the anchoring elements 20 are received inside the cylindrical wall 28.

In operation the piston 11 is moved by the pneumatic driving system between the first position P1 and the second position P2 such as to move the anchoring flaps 16 between the release position R and the hooking position T.

In particular, when the piston 11 is moved from the release position R to the hooking position T, the end portion 34 of the pin 7, positioned in such positions inside the cylindrical wall 28, cooperates with the further ends 18 of the anchoring flaps 16 to space the anchoring elements 20 away from one another in such a manner that the anchoring elements 20 are anchored on the edge 29 of the ring element 28.

Also, in use, the further springs 31 act as a safety device inasmuch as they push the piston 11 to the second position P2 so as to maintain the anchoring flaps 16 in the hooking position T.

In this manner, even after a malfunction of the source of pressurised air, the supporting plate 5 remains hooked to the slide 4.

Also, in use, an operator may rapidly unhook the supporting plate 5 from the slide 4 by pressing the pushbutton 32.

In fact, by pressing the pushbutton 32, the valve 32 is driven that enables the pneumatic driving system to position the piston 11 in the first position P1.

It should be noted how the device 1 is safer than known devices and enables the respective supporting plate 5 to be replaced rapidly.

In fact, in order to replace the supporting plate 5, it is sufficient to move the anchoring flaps 16 between the hooking position T and the release position R, which makes replacing the supporting plate 5 very rapid.

Also, it should be noted how the device 1 enables the plate 5 to be locked on the slide 4 in any relative angular position.

This makes continuous adjustment of the angular position of the supporting plate 5 with respect to the slide 4 available.

In one embodiment of the invention, which is not shown, the anchoring flaps 16 project longitudinally from a single cylindrical body.

In a further embodiment of the invention, which is not shown, the valve is driven automatically by a driving device.

In another further embodiment of the invention, which is not shown, the anchoring flaps 16 are integral with the piston 11.

## Claims

1. Device comprising a slidable element (4) for sliding along a cross member (2) of a machine tool for machining a panel made of wood or similar materials, a supporting element (5) for supporting said panel, and connecting means (7, 11, 16, 24, 26, 31) for connecting in a releasable manner said supporting element (5) to said slidable element (4), wherein said connecting means (7, 11, 16, 24, 26, 31) comprises hooking means (16, 24, 31) supported by said slidable element (4) and further hooking means (26) supported by said supporting element (5), **characterized by** said hooking means (16, 24, 31) being drivable between a hooking position (T) in which said hooking means (16, 24, 31) engages with said further hooking means (26) to fix said supporting element (5) to said slidable element (4) and a release position (R) in which said hooking means (16, 24, 31) disengages from said further hooking means (26) to release said supporting element (5) from said slidable element (4),
wherein said hooking means (16, 24, 31) comprises a plurality of anchoring flaps (16) arranged mutually angularly spaced apart from one another along a substantially circular path;
said connecting means (7, 11, 16, 24, 26, 31) comprising driving means (7, 11) for moving said hooking means (16, 24, 31) between said hooking position (T) and said release position (R);
said driving means (7, 11) comprising a piston (11) that is slidable in a chamber (12) obtained in said slidable element (4) between a first position (P1) in which said piston (11) positions said hooking means (16, 24, 31) in said release position (R) and a second position (P2) in which said piston (11) positions said hooking means (16, 24, 31) in said hooking position (T);
said driving means (7, 11) comprising a pin element (7) fixed to said slidable element (4) and arranged for slidably supporting said piston (11) and said anchoring flaps (16), said anchoring flaps (16) being interposed between said pin element (7) and said piston (11);
said hooking means (16, 24, 31) comprising elastic means (24) acting on said anchoring flaps (16) to maintain said anchoring flaps (16) pressed against said pin element (7).

2. device according to claim 1, wherein said anchoring flaps (16) comprise respective anchoring elements (20) projecting outwards, said anchoring elements (20) being further from one another in said hooking position (T) to hook to said further hooking means (26) and being nearer one another in said release position (R) to unhook from said further hooking means (26).

3. Device according to claim 2, wherein said further hooking means comprises a ring element (26) arranged for engaging with said anchoring elements (20) in said hooking position (T).

4. Device according to claim 3, wherein said ring element (26) is supported by, and bounds an opening (27) of, a cylindrical wall (28) projecting from said supporting element (5) to said slidable element (4), said anchoring elements (20) being received in said hooking position (T) and in said release position (R), inside said cylindrical wall (28).

5. Device according to any preceding claim, wherein said piston is a double-acting piston (11).

6. Device according to any preceding claim, wherein on said piston (11) respective ends (17) of said anchoring flaps (16) are hinged.

7. Device according to claim 4, wherein said pin element (7) comprises an end portion (34) positioned, in said hooking position (T) and in said release position (R), inside said cylindrical wall (28), said end portion (34) cooperating, when said piston (11) is moved from said first position (P1) to said second position (P2), with further ends (18), opposite said ends (17), of said anchoring flaps (16) to space said anchoring elements (20) away from one another so that said anchoring elements (20) is anchored to said ring element (26).

8. Device according to any preceding claim, wherein said elastic means (24) comprises a spring positioned around said anchoring flaps (16).

9. Device according to any one of claims 1 to 8, wherein said hooking means (16, 24, 31) comprises further elastic means (31) acting between said slidable element (4) and said piston (11) to push said piston (11) towards said second position (P2).

10. Device according to any one of claims 1 to 9, wherein said connecting means (7, 11, 16, 24, 26, 31) comprises driving valve means flowingly communicating with said chamber (12) and drivable for positioning said piston in said first position (P1).

11. device according to any preceding claim, wherein said supporting element (5) comprises suction-cup means (30) for retaining said panel.

12. Machine tool for machining workpieces made of wood or similar materials comprising a device (1) as claimed in any preceding claim.

## Patentansprüche

1. Vorrichtung umfassend ein verschiebbares Element (4) zum Verschieben entlang eines Querbalkens (2) einer Werkzeugmaschine zum Bearbeiten eines Paneels, das aus Holz oder ähnlichen Materialien hergestellt ist, ein Halteelement (5) zum Halten des Paneels, und ein Verbindungsmittel (7, 11, 16, 24, 26, 31) zum freigebbaren Verbinden des Halteelements (5) mit dem verschiebbaren Element (4), wobei das Verbindungsmittel (7, 11, 16, 24, 26, 31) ein Einhakmittel (16, 24, 31) umfasst, das über das verschiebbare Element (4) gelagert ist und ein weiteres Einhakmittel (26), das über das Halteelement (5) gelagert ist, **dadurch gekennzeichnet, dass** das Einhakmittel (16, 24, 31) zwischen einer Einhakposition (T), in der das Einhakmittel (16, 24, 31) mit dem weiteren Einhakmittel (26) in Eingriff steht, um das Halteelement (5) an dem verschiebbaren Element (4) zu fixieren und einer Freigabeposition (R) antreibbar ist, in der das Einhakmittel (16, 24, 31) außer Eingriff mit dem weiteren Einhakmittel (26) steht, um das Halteelement (5) von dem verschiebbaren Element (4) freizugeben, wobei das Einhakmittel (16, 24, 31) mehrere Befestigungslaschen (16) umfasst, die wechselseitig winkelförmig voneinander beabstandet entlang einer im Wesentlichen kreisförmigen Bahn angeordnet sind;
das Verbindungsmittel (7, 11, 16, 24, 26, 31) ein Antriebsmittel (7, 11) zum Bewegen des Einhakmittels (16, 24, 31) zwischen der Einhakposition (T) und der Freigabeposition (R) umfasst;
das Antriebsmittel (7, 11) einen Kolben (11) umfasst, der in einer Kammer (12), die in dem verschiebbaren Element (4) enthalten ist, zwischen einer ersten Position (P1), in der der Kolben (11) das Einhakmittel (16, 24, 31) in der Freigabeposition (R) positioniert, und einer zweiten Position (P 2) verschiebbar ist, in der der Kolben (11) das Einhakmittel (16, 24, 31) in der Einhakposition (T) positioniert;
das Antriebsmittel (7, 11) ein Bolzenelement (7) umfasst, das an dem verschiebbaren Element (4) befestigt ist, und das angeordnet ist für ein verschiebbares Lagern des Kolbens (11) und der Befestigungslaschen (16), wobei die Befestigungslaschen (16) zwischen dem Bolzenelement (7) und dem Kolben (11) angeordnet sind;
das Einhakmittel (16, 24, 31) ein elastisches Mittel (24) umfasst, das auf die Befestigungslaschen (16) wirkt, um die Befestigungslaschen (16) gegen das Bolzenelement (7) gepresst zu halten.

2. Vorrichtung gemäß Anspruch 1, bei der die Befestigungslaschen (16) jeweilige Befestigungselemente (20) umfassen, die nach außen vorstehen, wobei die Befestigungselemente (20) in der Einhakposition (T) weiter voneinander entfernt angeordnet sind, um an dem weiteren Einhakmittel (26) einzuhaken und in der Freigabeposition (R) näher zueinander angeordnet sind, um von dem weiteren Einhakmittel (26) auszuhaken.

3. Vorrichtung gemäß Anspruch 2, bei der das weitere Einhakmittel ein Ringelement (26) umfasst, das für ein Eingreifen mit den Befestigungselementen (20) in der Einhakposition (T) angeordnet ist.

4. Vorrichtung gemäß Anspruch 3, bei der das Ringelement (26) gehalten ist über, und eine Öffnung (27) begrenzt, von einer zylindrischen Wandung (28), die von dem Halteelement (5) zu dem verschiebbaren Element (4) hervorsteht, wobei die Befestigungselemente (20) in der Einhakposition (T) und in der Freigabeposition (R), innerhalb der zylindrischen Wand (28) aufgenommen sind.

5. Vorrichtung gemäß einem der vorstehenden Ansprüche, bei der der Kolben ein doppelt wirkender Kolben (11) ist.

6. Vorrichtung gemäß einem der vorstehenden Ansprüche, bei der jeweilige Enden (17) der Befestigungslaschen (16) an dem Kolben (11) verschwenkbar sind.

7. Vorrichtung gemäß Anspruch 4, bei der das Bolzenelement (7) einen Endbereich (34) umfasst, der in der Einhakposition (T) und in der Freigabeposition (R) innerhalb der zylindrischen Wandung (28) positioniert ist, wobei der Endbereich (34), wenn der Kolben (11) von der ersten Position (P 1) zu der zweiten Position (P 2) bewegt ist, mit weiteren Enden (18) zusammen wirkt, die gegenüber liegend zu den Enden (17) angeordnet sind, von den Befestigungslaschen (16), um die Befestigungselemente (20) voneinander weg zu beabstanden, so dass die Befestigungselemente (20) an dem Ringelement (26) befestigt sind.

8. Vorrichtung gemäß einem der vorstehenden Ansprüche, bei der das elastische Mittel (24) ein Federelement umfasst, das um die Befestigungslaschen angeordnet ist.

9. Vorrichtung gemäß einem der Ansprüche 1 bis 8, bei der das Einhakmittel (16, 24, 31) ein weiteres elastisches Mittel (31) umfasst, das zwischen dem verschiebbaren Element (4) und dem Kolben (11) wirkt, um den Kolben (11) in die zweite Position (P2) zu drängen.

10. Vorrichtung gemäß einem der Ansprüche 1 bis 9, bei der das Verbindungsmittel (7, 11, 16, 24, 26, 31) ein Antriebsventilmittel umfasst, das fließend mit der Kammer (12) kommuniziert und zum Positionieren des Kolbens in der ersten Position (P1) antreibbar ist.

11. Vorrichtung gemäß einem der vorstehenden Ansprüche, bei der das Halteelement (5) ein Saugmittel (30) zum Festhalten des Paneels umfasst.

12. Werkzeugmaschine zum Bearbeiten von Werkstücken, die aus Holz oder ähnlichen Materialien hergestellt sind, umfassend eine Vorrichtung (1) gemäß einem der vorstehenden Ansprüche.

## Revendications

1. Dispositif comprenant un élément coulissant (4) destiné à coulisser le long d'une pièce transversale (2) d'une machine-outil pour l'usinage d'un panneau en bois ou en des matériaux similaires, un élément de support (5) destiné à porter ledit panneau, et des moyens de fixation (7, 11, 16, 24, 26, 31) destinés à fixer d'une manière libérable ledit élément de support (5) sur ledit élément coulissant (4), dans lequel lesdits moyens de fixation (7, 11, 16, 24, 26, 31) comprennent des moyens d'accrochage (16, 24, 31) portés par ledit élément coulissant (4) et des moyens d'accrochage additionnels (26) portés par ledit élément de support (5),
**caractérisé par le fait que** lesdits moyens d'accrochage (16, 24, 31) peuvent être actionnés entre une position d'accrochage (T) dans laquelle lesdits moyens d'accrochage (16, 24, 31) sont en prise avec lesdits moyens d'accrochage additionnels (26) afin de fixer ledit élément de support (5) sur ledit élément coulissant (4) et une position de dégagement (R) dans laquelle lesdits moyens d'accrochage (16, 24, 31) se dégagent desdits moyens d'accrochage additionnels (26) afin de détacher ledit élément de support (5) dudit élément coulissant (4),
dans lequel lesdits moyens d'accrochage (16, 24, 31) comprennent une pluralité de bras d'ancrage (16) disposés en étant mutuellement espacés d'un certain angle les uns par rapport aux autres le long d'une trajectoire sensiblement circulaire ;
lesdits moyens de fixation (7, 11, 16, 24, 26, 31) comprenant des moyens d'actionnement (7, 11) pour le déplacement desdits moyens d'accrochage (16, 24, 31) entre ladite position d'accrochage (T) et ladite position de dégagement (R) ;
lesdits moyens d'actionnement (7, 11) comprenant un piston (11) qui peut coulisser dans une chambre (12) ménagée dans ledit élément coulissant (4) entre une première position (P1) dans laquelle ledit piston (11) place lesdits moyens d'accrochage (16, 24, 31) dans ladite position de dégagement (R) et une deuxième position (P2) dans laquelle ledit piston (11) place lesdits moyens d'accrochage (16, 24, 31) dans ladite position d'accrochage (T) ;
lesdits moyens d'actionnement (7, 11) comprenant un élément à tige (7) fixé sur ledit élément coulissant (4) et agencé pour porter de manière coulissante ledit piston (11) et lesdits bras d'ancrage (16), lesdits bras d'ancrage (16) étant interposés entre ledit élément à tige (7) et ledit piston (11) ;
lesdits moyens d'accrochage (16, 24, 31) comprenant des moyens élastiques (24) qui agissent sur lesdits bras d'ancrage (16) pour maintenir lesdits bras d'ancrage (16) appuyés contre ledit élément à tige (7).

2. Dispositif selon la revendication 1, dans lequel lesdits bras d'ancrage (16) comprennent des éléments d'ancrage (20) respectifs qui se projettent vers l'extérieur, lesdits éléments d'ancrage (20) étant éloignés les uns des autres dans ladite position d'accrochage (T) en vue de l'accrochage auxdits moyens d'accrochage additionnels (26) et étant proches les uns des autres dans ladite position de dégagement (R) en vue du décrochage par rapport auxdits moyens d'accrochage additionnels (26).

3. Dispositif selon la revendication 2, dans lequel lesdits moyens d'accrochage additionnels comprennent un élément annulaire (26) disposé de manière à venir en prise avec lesdits éléments d'ancrage (20) dans ladite position d'accrochage (T).

4. Dispositif selon la revendication 3, dans lequel ledit élément annulaire (26) est porté par une paroi cylindrique (28) dans laquelle il délimite une ouverture (27) et qui forme une projection à partir dudit élément de support (5) vers ledit élément coulissant (4), lesdits éléments d'ancrage (20) étant reçus, dans ladite position d'accrochage (T) et dans ladite position de dégagement (R), à l'intérieur de ladite paroi cylindrique (28).

5. Dispositif selon une quelconque revendication précédente, dans lequel ledit piston est un piston (11) à double action.

6. Dispositif selon une quelconque revendication précédente, dans lequel des extrémités respectives (17) desdits bras d'ancrage (16) sont articulées pour pivoter par rapport audit piston (11).

7. Dispositif selon la revendication 4, dans lequel ledit élément à tige (7) comprend une partie terminale (34) positionnée, dans ladite position d'accrochage (T) et dans ladite position de dégagement (R), à l'intérieur de ladite paroi cylindrique (28), ladite partie terminale (34) coopérant, lorsque ledit piston (11) est déplacé de ladite première position (P1) vers ladite deuxième position (P2), avec des extrémités additionnelles (18), situées à l'opposé desdites extrémités (17), desdits bras d'ancrage (16) afin d'écarter lesdits éléments d'ancrage (20) les uns des autres de telle sorte que lesdits éléments d'ancrage (20) soient ancrés audit élément annulaire (26).

8. Dispositif selon une quelconque revendication précédente, dans lequel lesdits moyens élastiques (24) comprennent un ressort mis en place autour desdits bras d'ancrage (16).

9. Dispositif selon l'une quelconque des revendications 1 à 8, dans lequel lesdits moyens d'accrochage (16, 24, 31) comprennent des moyens élastiques additionnels (31) agissant entre ledit élément coulissant (4) et ledit piston (11) pour pousser ledit piston (11) vers ladite deuxième position (P2).

10. Dispositif selon l'une quelconque des revendications 1 à 9, dans lequel lesdits moyens de fixation (7, 11, 16, 24, 26, 31) comprennent des moyens de soupape d'actionnement qui sont en communication d'écoulement avec ladite chambre (12) et qui peuvent être actionnés pour positionner ledit piston dans ladite première position (P1).

11. Dispositif selon une quelconque revendication précédente, dans lequel ledit élément de support (5) comprend des moyens à ventouse (30) destinés à immobiliser ledit panneau.

12. Machine-outil pour usiner des pièces devant être travaillées qui sont en bois ou en des matériaux similaires, comprenant un dispositif (1) tel que revendiqué dans une quelconque revendication précédente.
